# EUROPEAN PATENT APPLICATION

(11) **EP 4 148 073 A1**
(43) Date of publication of application: **15.03.2023**
(21) Application number: 21075009.7
(22) Date of filing: 08.09.2021
(51) Int. Cl.: C08F 218/04, C09D 143/04

(54) **ONE PACK AMBIENT CURE CROSSLINKABLE COPOLYMERS OF VINYL BRANCHED ESTER AND VINYL SILANE COMPOSITIONS AND USE THEREOF**

(71) Applicant: Hexion Inc., Columbus, OH 43215 (US)
(72) Inventor: Steinbrecher, Christophe, 1348 Ottignies Louvain-La-Neuve (BE); Boulet, Laure, 1348 Ottignies Louvain-La-Neuve (BE); Heymans, Denis, 1348 Ottignies Louvain-La-Neuve (BE); Havaux, Nathalie, 1348 Ottignies Louvain-La-Neuve (BE)
(74) Representative: Sonnenhauser, Thomas Martin

(57) **Abstract**

The invention relates to a process to produce a stable copolymer composition, consisting in an organic solvent, an alkyl-alkoxysilane and\or an alcohol in C1 to C9, the monomers and the radical initiator are added to the reactor. The copolymer composition is based on modified vinyl branched ester polymer with vinyl silane and a water scavenger. The copolymer composition can be formulated to the desired viscosity that allows the application by standard technics, and the curing is optimized in the presence of an appropriated catalyst as one pack system to be cure at room temperature.

## Description

### FIELD OF THE INVENTION

The present invention relates to a process to produce a stable resin used in low temperature (<80°C) moisture curable, one package coatings. By which a silane copolymer is prepared by radical polymerization in presence of a non-polymerisable water scavenger such as an alkoxysilane, orthoester or titanate and/or a C1-C9 alcohol

The coating composition composed of
A) a silane-vinyl ester-based copolymer,
B) optionally pigments and fillers,
C) solvents,
D) paint additives,
E) a water scavenger such as an alkoxy silane, vinyl silanes, orthoesters, titanates preferably a vinyl silane, most preferably vinyl trimethoxy silane,
F) optionally of a C1 to C6 alcohol,
G) optionally of a polysiloxane polymer and,
H) an adhesion promotor.
I) a curing catalyst

Said polymeric composition is particularly suitable for ambient cure (<60°C) coatings and adhesives applications.

### BACKGROUND OF THE INVENTION

The use of silane in one-pack (1K) acrylic coating formulations are well known and especially acrylic-silane coating compositions have an accepted cure rate and upon curing product films having good physical and chemical properties. However, one important disadvantage of these compositions is their short potlife. Since decades options to solve this main drawback have been addressed by the industry.

The US 4, 043, 953 is about ambient temperature, moisture-curable coating compositions in which improved potlife is achieved by this invention comprise a blend of an acrylic-silane interpolymer derived from monomers which are devoid of active hydrogen atoms, a cure accelerating catalyst and a monomeric hydrolytically reactive organosilicon compound represented by the structural formula: Xn Si(OR)4-n.

The EP0007765 stated the following comment on the above: while the method disclosed in US 4,043,953 undoubtedly improves the stability of polymeric organosilanes, we have found that this method has certain limitations, especially when one desires to employ the polymeric organosilanes as adhesion promoter additives, rather than as coatings per se. For a number of reasons the viscosity stability requirements are somewhat more stringent when the polymeric organosilane is used as an adhesion promoter additive, rather than as a coating material. Therefore, the EP 0007765 and EP 0050249 have found the presence of a low molecular weight alcohol and a monomeric hydrolytically reactive compound has a synergic effect on the stability of the acrylic-silane interpolymer.

The WO 0198419 two decades later is still looking to propose so called one-pack system by the physical separation of the catalyst, the catalyst is normally packaged separately from the (pigmented) polymer. The components are mixed together shortly before application of the coating. Fast drying storage stable pseudo-one-pack systems are possible using "duplex" tins where the catalyst is stored separately from the paint in one can.

The WO 04067576 demonstrates that a stable coating formulation can be obtained when the acrylic polymer is substantially free of functional groups that can react with the polysiloxane or with the catalyst. The document is silent about the coating properties.

Accordingly, there is a need for compositions which have a reduced cure cycle and temperature while minimizing the effects of undesirable chemicals and in methods for applying such compositions. Most preferably, the industry is looking for systems able to cure at room temperature after application and yet being stable in the can before application.

### SUMMARY OF THE INVENTION

Embodiments of the invention are directed to a process leading to polymeric compositions which shows improved stability and processes for applying polymeric composition.
In one aspect of the invention, a process to produce a polymer composition is provided, the composition including an organosilane copolymer derived from at least A₁ and A₂ monomers, and wherein, the A₁ monomer comprises a vinyl ester monomer and the A₂ monomer comprises a vinyl silane monomer and a non-polymerizable water scavenger(E) selected from the group consisting of an alkoxy silane, an orthoester, atitanate, a zirconate, an oxazolidine, a sulfate, and/or a C1-C9 alcohol and combinations thereof.

In another aspect of the invention, a method is provided for applying a composition including an organosilane copolymer derived from at least A₁ and A₂ monomers, wherein, the A₁ monomer comprises a vinyl ester monomer and the A₂ monomer comprises a vinyl silane monomer and a water scavenger selected from the group consisting of a vinyl silane, an orthoester, a titanate, a zirconate, an oxazolidine, a sulfate, and/or a C1-C9 alcohol and combinations thereof. The composition may further include one or more materials selected from the group consisting of a solvent, a catalyst, a pigment, a filler, a paint additive, a C1 to C6 alcohol, a polysiloxane polymer, an adhesion promotor, and combinations thereof. The composition may further be cured in the presence of moisture.

### DETAILED DESCRIPTION OF THE INVENTION

The present invention provides a process leading to polymeric compositions which shows improved stability and processes for applying polymeric composition. The process consisting of reacting vinyl ester monomers, silane functional monomers and an organic peroxide in the presence of a non-polymerizable moisture scavenger selected from the group an alkoxy silane, orthoesters or titanates, preferably an alkyl-alkoxysilane and / or an alcohol in C1 to C9 at a reaction temperature between 80°C and 200°C. Wherein the preferred alkyl-alkoxysilane is methyltrimethoxysilane, ethyltrimetoxysilane, methyltriethoxysilane, ethyltriethoxysilane, or a blend thereof and/or an
alcohol in C1 to C9 such as methanol, ethanol, propanol, isopropanol, butanol, isobutanol, terbutanol, pentanol, hexanol, heptanol, octanol, isononanol and combination thereof. It has been found that the combination of the alkyl-alkoxysilane and the alcohol has a synergetic effect on the stability of the formulation.
Wherein the alkyl-alkoxysilane and the alcohol in C1 to C9 are present in a weight ratio of 100/0 to 30/70 Wherein the moisture scavenger is present in a weight ratio between 1/100 and 15/85 over the amount of total of monomer used.

The polymeric composition must include an organosilane copolymer and a water scavenger. The water scavenger may be selected from the group consisting of a vinyl silane, an alkyl silane an orthoester, a titanate, a zirconate, an oxazolidine, a sulfate, and/or a C1-C9 alcohol and combinations thereof. The polymeric compositions are useful in coating and other applications. The composition may further include one or more materials selected from the group consisting of a solvent, a catalyst, a pigment, a filler, a paint additive, a C1 to C6 alcohol, a polysiloxane polymer, an adhesion promotor, and combinations thereof.

The polymeric composition may be formulated to the desired viscosity that allows the application by standard coating technics, and the curing rate is optimized in the presence of an appropriated catalyst.
The polymeric composition may include an organosilane copolymer and a water scavenger. The organosilane copolymer may comprise from 5 wt.% to 80 wt.%, such as from 10 wt.% to 60 wt.%, for example, from 20 wt.% to 50 wt.% of the polymeric composition. The water scavenger may comprise from 0,05 wt.% to 10 wt.%, such as from 0.1 wt.% to 5 wt.%, for example, from 1 wt.% to 3 wt.% of the polymeric composition.

The polymeric composition comprises an organosilane copolymer. In one embodiment, the organosilane copolymer is derived from at least A₁ and A₂ monomers, wherein, the A₁ monomer comprises a vinyl ester monomer and the A₂ monomer comprises a silane functional monomer such as vinyl silane trimethoxy, vinyl triethoxy silane, methyl vinyl diethoxy silane, an acrylosilane monomer , a methacrylo silane monomer or a combination thereof. The co-polymer may also be derived from one or more optional monomers selected from the group consisting of a monomer comprising vinyl acetate (A₃ monomer), a monomer comprising an acrylate ester, a metacrylate ester (A₄ monomer), or a combination thereof, , a monomer comprising any other vinyl monomer than a vinyl ester or vinyl silane (A5 monomer), and combinations thereof.

The A₁ monomer comprising a vinyl ester monomer may have the formula: 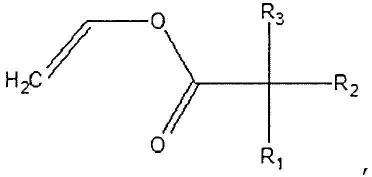 wherein R1, R2, R3 are hydrogen or alkyl groups with 1 to 15 carbon atoms, the total number of carbon atoms of R1, R2, and R3 ranging from 1 to 20. In one embodiment, the total number of carbon atoms of R1, R2, and R3 ranging from 5 to 12. Suitable vinyl esters include those derived from branched acids such as pivalic acid, 2-ethyl hexanoic, neo acids (also known as VERSATIC ACID ^{™} from Hexion Inc.) with the total carbon atoms in R1, R2, and R3 are 7, 8, 9, and 10. Examples of these vinyl ester monomers include vinyl pivalate, vinyl 2 ethylhexanoate, vinyl neodecanoate and vinyl neo nonanoate and combinations thereof. Commercial examples of the vinyl ester monomers include VeoVa 9, VeoVa 10, and combinations thereof, commercially available from Hexion Inc., Columbus, Ohio.

The vinyl ester monomer, A1 monomer, may comprise from 15 wt.% to 95% wt.%, such as from 30 wt.% to 95 wt.%, from 50 wt.% to 90 wt.%, of the total weight percent (100 wt.%) of the monomers.

The vinyl silane monomer, A₂ monomer, may comprises the formula: 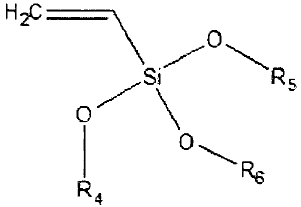 OR 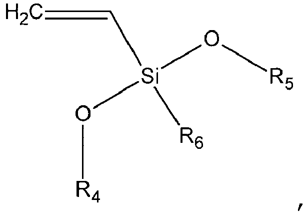 wherein R4, R5, and R6 are alkyl groups having 1 to 4 carbon atoms. Suitable vinyl silanes and R4-R6 are methoxy or ethoxy. Suitable examples of these vinyl silane monomers include vinyl silane trimethoxy, vinyl triethoxy silane, methyl vinyl diethoxy silane_, and combinations thereof. Commercial examples of the vinyl silane monomers include Silquest A171 and Silquest A151, and combinations thereof, are commercially available from Momentive Performance Materials Inc, from New York, USA (Country, or City and state if US).

The monomer A₂ comprising an acrylosilane or methacrylo silane, may also be used for the copolymer. Suitable examples of the acrylosilane monomer include methacryloxypropyl methyldimethoxysilane, methacryloxy trimethoxysilane and methacryloxy triethoxysilane and combinations thereof. Commercial examples of the acrylosilane monomer include Silquest A 174, Silquest* Y-11878 and combinations thereof, are commercially available from Momentive Performance Materials Inc, (Company name) from New York, USA (Country, or City and state if US)

The vinyl silane monomer, A₂ monomer, may comprise from 1 wt.% to 35% wt.%, such as from 2 wt.% to 25 wt.%, for example, from 2 wt.% to 20 wt.%, of the total weight percent (100 wt.%) of the monomers. The monomer A₂ comprising an acrylosilane, A₂ monomer, may comprise from 0 wt.% to 25% wt.%, such as from 0 wt.% to 15 wt.%, from 5 wt.% to 10 wt.%, of the total weight percent (100 wt.%) of the monomers.

The monomer comprising vinyl acetate, A₃ monomer, may comprise from 0 wt.% to 75% wt.%, such as from 0 wt.% to 60 wt.%, from 20 wt.% to 50 wt.%, of the total weight percent (100 wt.%) of the monomers.

The monomer comprising an acrylate ester, a metacrylate ester, or a combination thereof, A₄ monomer, may also be used for the copolymer. Suitable examples of the A₄ monomer include methyl methacrylate, ethyl methacrylate, n-butyl methacrylate,iso-butyl methacrylate, ter-butyl methacrylate, isopropyl methacrylate, and isobornyl methacrylate, ethyl acrylate, butyl acrylate, and 2-ethyl hexyl acrylate and combinations thereof. The monomer comprising an acrylate ester, a metacrylate ester, or a combination thereof, A₄ monomer, may comprise from 0 wt.% to 97% wt.%, such as from 0 wt.% to 40 wt.%, from 5 wt.% to 25 wt.%, of the total weight percent (100 wt.%) of the monomers.

The monomer comprising any other vinyl monomer than a vinyl ester or vinyl silane, A₅ monomer, may also be used for the copolymer. Suitable examples of the A₅ monomer include N-vinyl pyrolidone, vinyl ethers, acrylic acid, methacrylic acid and combinations thereof.

The monomer comprising any other vinyl monomer than a vinyl ester or vinyl silane, A₅ monomer, may comprise from 0 wt.% to 30% wt.%, such as from 0 wt.% to 10 wt.%, from 0 wt.% to 5 wt.%, of the total weight percent (100 wt.%) of the monomers.

In one embodiment of the invention, the copolymer derived from at least the A₁ and A₂ monomers comprises:
from 10 wt.% to 95% wt.% of A₁ monomer;
from 5 wt.% to 35% wt.% of A₂ monomer;
from 0 wt.% to 75% wt.% of A₃ monomer;
from 0 wt.% to 97% wt.% of A₄ monomer; and
from 0 wt.% to 30% wt.% of A₅ monomer;
wherein the wt.% is based on the total weight of the at least A₁ and A₂ monomers, and the total weight percent is 100 wt.%.

The copolymer may have a Number average molecular weight from 1,000 daltons to 40,000 daltons, such as from 2,000 daltons to 25,000 daltons, from 3,500 daltons to 12,000 daltons.

Suitable water scavenger for the paint composition may be selected from the group consisting of vinyl silanes, orthoesters, titanates, zirconates, oxazolidines, calcium sulfate, calcium oxide, isocyanates zeolite based molecular sieves and combinations thereof. Examples of water scavengers include vinyl trimethoxy silane, vinyl triethoxy silane, trimethyl orthoformate, triethyl orthoformate, triethyl orthoacetate, tetra n-butyl titanate, di-isobutoxyl titanium chelate with ethyl acetoacetate, and combinations thereof.

In one embodiment, polymeric composition includes a coating formulation comprising the copolymer based on the monomers described herein, a water scavenger described herein, a catalyst, an organic solvent, and optionally, one or more additives.

In one embodiment, the copolymer may comprise from 10 wt.% to 90 wt.%, such as from 5 wt.% to 80 wt.%, from 10 wt.% to 60 wt.%, of the total weight percent (100 wt.%) of the coating formulation.

In one embodiment, the water scavenger may comprise from 0.05 wt.% to 15 wt.%, such as from 0.1 wt.% to 10 wt.%, from 0.2 wt.% to 5 wt.%, of the total weight percent (100 wt.%) of the coating formulation.

The catalyst may be selected from the group of a strong acid, a lewis acid, a carboxylic acid, a base, like an amine, caustic or an alcoholate and combinations thereof. An alternative catalyst is a nitrate of a polyvalent metal ion such as calcium nitrate, magnesium nitrate, aluminium nitrate, zinc nitrate, or strontium nitrate, Nitrates might also be conveniently combined with amines. Other catalysts include carbonates such as sodium or calcium carbonate. Commercial examples of catalysts include SiliXan Cat 240 (SiliXan GmbH), Nacure 4054, Nacure 5076, TYZOR TNBT, TYZOR 9000, K-Kat 670(King Industries), DBTDL (dibutyl tin dilaurate) (Sigma Aldrich),3-aminopropyltrimethoxysilane (Sigma), 2-ethyl hexanoic acid, Versatic acid (Hexion) and combinations thereof. A preferred commercial catalyst for an one package system for coating formulation is DBTDL.

In one embodiment, the catalyst may comprise from 0.1 wt.% to 3 wt.%, such as from 0.2 wt.% to 2 wt.%, from 0.3 wt.% to 1 wt.%, of the total weight percent (100 wt.%) of the polymeric composition.

The organic solvent may be selected from the group of esters, ethers, ketones, aromatics and aliphatics and combinations thereof. Examples of organic solvents include butyl acetate, xylene, methyl amyl ketone, ethoxyethyl propionate, and combinations thereof.

In one embodiment, the organic solvent may comprise from 5 wt.% to 60 wt.%, such as from 10 wt.% to 55 wt.%, from 25 wt.% to 50 wt.%, of the total weight percent (100 wt.%) of the polymeric composition.

The optional one or more additives may include one or more materials including a pigment, a filler, a paint additive, a C1 to C6 alcohol, a polysiloxane polymer [[formula x-O-Si (R, R') n -y]], an adhesion promotor, and combinations thereof.

The C1 to C6 alcohol may be selected from the group consisting of methanol, ethanol, propanol, isopropanol, butanol, isobutanol, and combinations thereof. The formulation may have 0 wt.% of the optional C1 to C6 alcohol. When present the C1 to C6 alcohol may be from 0.1wt. % to 15 wt.%, such as from 1 wt.% to 10 wt.%, from 2 wt.% to 6 wt.%, of the total weight percent (100 wt.%) of the polymeric composition.

Suitable polysiloxane polymers may be selected from the group consisting of linear and branched polyalkyl siloxane and combinations thereof. The formulation may have 0 wt.% of the polysiloxane polymer. When present the polysiloxane polymer may be from 1 wt.% to 60 wt.%, such as from 5 wt.% to 30 wt.%, from 10 wt.% to 25 wt.%, of the total weight percent (100 wt.%) of the polymeric composition.

The adhesion promotor may include epoxy silanes, alkoxysilanes and aminosilanes, titanates and zirconates and combinations thereof. Examples of suitable adhesion promoters may be selected from the group consisting of epoxypropyl trimethoxy silane and, epoxy silane oligomers, and combinations thereof. Commercial examples of adhesion promotors include Silquest A-187, Silquest A-1871 and CoatOsil MP 200 commercially available from Momentive Performance Materials from New York USA.

The formulation may have 0 wt.% of the adhesion promotor. When present the adhesion promotor may be from 0.05 wt.% to 4 wt.%, such as from 0.1 wt.% to 3 wt.%, from 0.5 wt.% to 2 wt.%, of the total weight percent (100 wt.%) of the polymeric composition.

Pigments may include anatase and rutile type of titanium dioxide, lead oxide, zinc oxide, iron oxides, carbon black and organic pigments and combinations thereof. Examples of suitable pigments may be selected from the group consisting of titanium oxide, iron oxide and combinations thereof. The formulation may have 0 wt.% of the pigments. When present the pigments may be from 3 wt.% to 60 wt.%, such as from 5 wt.% to 50 wt.%, for example, from 5 wt.% to 40 wt.%, of the total weight percent (100 wt.%) of the polymeric composition. Preferred pigments are those with a low water content (<2%). Titanium dioxide in particular may have a hydrophobic surface treatment. Preferred titanium dioxide grades have a hydrophobic surface treatment such as silicone. They include Ti-Pure^{™} R-350 from Chemours and 2222 from Kronos GmbH.

Fillers may include barium and calcium sulfate, silica oxides, silicates and combinations thereof. The formulation may have 0 wt.% of the fillers. When present the fillers may be from 5 wt.% to 50 wt.%, such as from 10wt.% to 40wt.%, from 10 wt.% to 30 wt.%, of the total weight percent (100 wt.%) of the polymeric composition.

Paint additives may include UV stabilizers, corrosion inhibitors, heat stabilizers, slip and mar additives, biocides, thickeners and combinations thereof. The formulation may have 0 wt.% of the paint additives. When present the paint additives may be from 0,01 wt.% to 8 wt.%, such as from 0.02 wt.% to 6 wt.%, from 0.02 wt.% to 5 wt.%, of the total weight percent (100 wt.%) of the polymeric composition.

In one embodiment, the formulation comprises:
from 5 wt.% to 80 wt.% of the organosilane copolymer;
from 0.1 wt.% to 10% wt.% of the water scavenger;
from 5 wt.% to 60 wt.% of the solvent;
from 0.05 wt.% to 3.0 wt.% of the catalyst;
from 0 wt.% to 15% wt.% of the C1 to C6 alcohol;
from 0 wt.% to 60% wt.% of the polysiloxane polymer;
from about 0 wt.% to about 4 wt.% of the adhesion promoter; and
from 0 wt.% to 60 wt.% of paint additives / pigments / fillers,
wherein the wt.% is based on the total weight of the composition and the total weight percent is 100 wt.%.

The total weight percent of the components of the polymeric composition comprise 100 weight percent.

This invention also concerns in one package system that has an extended self-life of at least one month comprising the copolymer based on the monomers described herein, a water scavenger described herein, a catalyst, an organic solvent, and optionally, one or more additives. The one package system has the wt.% of the components as described for the formulation described herein.

In order to provide a better understanding of the present invention including representative advantages thereof, the following examples are offered.

### EXAMPLES:

In order that those skilled in the art may more fully understand the invention presented herein, the following procedures and examples are set forth. Unless otherwise indicated, the following units of measurement and definitions apply in this application: all parts and percentages are by weight; temperatures are in degrees centigrade (°C).

### Experimental

For the following examples, the data was derived in accordance with the following procedures.
Solids: The solids is the weight percentage of nonvolatile material present in the coating formulations. It is measured by weight loss in ventilated oven for 1hr at 110°C
Viscosity: The viscosity is the resistance of the polymer preparation to flow. Viscosity is determined by Brookfield viscosimeter.
Molecular weight: The molecular weight is given in weight & number average Mw determined by Gel permeation chromatograph using polystyrene as reference, tetrahydrofurane as elution solvent and Refractive Index as detector like described in DIN Standard 55672
Potlife: The potlife is an estimation of the time during which the polymer composition can be used for a specific application. Potlife is typically determined by the time taken for the formulated system to double its initial viscosity in a closed can once the application has been performed.
Shelf-life: The shelf-life is an estimation of the time that the formulated binder can be stored without losing its performance in typical storage conditions. The shelf-life is typically determined by measuring viscosity variation.
Stability: The stability of 1K moisture-curable systems are considered comparatively by checking the maximum quantity of water% that can be added to the binder before gelling in a closed pot.

The following examples were performed and are provided to illustrate the invention and should not be interpreted as limiting the scope of the invention. **Examples 1 to 8:** in a glass reactor equipped with a stirrer and a nitrogen inflow. The initial reactor charge is poured in the reactor and a nitrogen blanket is applied (101n/h). The stirrer is set at 80RPM. The temperature is set to 115°C. The monomer mix is prepared by mixing the monomers and the initiator. Once the temperature inside the reactor is reached, a shot of initiator is added, and the nitrogen flow is stopped. Afterwards the monomer mix is added into the reactor over a period of 4 hours. At the end of the addition, the booster composed of the initiator and the solvent is added for 1 hour at 115°C. Then, the reactor is kept at the same temperature for an extra hour. The reactor is eventually cooled down below 80°C and the product discharged.

| **Initial reactor charge** | Ex1 201027CS | Ex2 201008CS | Ex3 201012CS | Ex4 201013CS | Ex5 201014CS | Ex6 201019CS | Ex7 201020CS | Ex8 201021CS |
|---|---|---|---|---|---|---|---|---|
| Butyl Acetate | 18.5 | | | 18.5 | 18.5 | 18.5 | 18.5 | |
| Exxsol D30 | | 18.5 | | | | | | 18.5 |
| ShellSol D25 | | | 18.5 | | | | | |
| Butanol Anhydrous | | | | 5 | | | | 2.5 |
| MethylTrimethoxySilane | | | | | 5 | | | 2.5 |
| Orthoformate | | | | | | | 2.5 | |
| Orthoacetate | | | | | | | 2.5 | |
| **Initiator shot** | | | | | | | | |
| Luperox 270 | 0.4 | 0.4 | 0.4 | 0.4 | 0.4 | 0.4 | 0.4 | 0.4 |
| **Monomer mix** | | | | | | | | |
| VeoVa 9 | 52 | 52 | 52 | 52 | 52 | 52 | 52 | 52 |
| VeoVa 10 | 28 | 28 | 28 | 28 | 28 | 28 | 28 | 28 |
| SilquestA171 | 5 | 5 | 5 | 5 | 5 | 5 | 5 | 5 |
| Silquest A174 | 15 | 15 | 15 | 15 | 15 | 15 | 15 | 15 |
| Luperox 270 | 1.4 | 1.4 | 1.4 | 1.4 | 1.4 | 1.4 | 1.4 | 1.4 |
| **Booster** | | | | | | | | |
| Butyl Acetate | 7.1 | | | 7.1 | 7.1 | 7.1 | 7.1 | 7.1 |
| Exxso! D30 | | 7.1 | 7.1 | | | | | |
| ShellSol D25 | | | | | | | | |
| Luperox 270 | 4 | 4 | 4 | 4 | 4 | 1.4 | 4 | 4 |
| Solids % | 78.2 | 79.7 | 81.6 | 77.7 | 76.8 | 79.2 | 76.3 | 78.1 |
| Viscosity (cps) | | 23370 | 16080 | 6132 | 9696 | 17300 | 5388 | 8880 |
| Mw (Da) | 22487 | 24272 | 24604 | 17881 | 22128 | 24535 | 20939 | 15799 |
| M n (Da) | 8098 | 8404 | 7733 | 7211 | 7933 | 9089 | 7994 | 6468 |
| PDI | 2.8 | 2.9 | 3.2 | 2.5 | 2.8 | 2.7 | 2.6 | 2.4 |
| Max water content until gel (ppm) | 400 | 400 | 600 | 800 | 1000 | 400 | 600 | 1200 |

Best stability results (lowest PDI, highest max water content before gel) are obtained by using butanol (Ex.4), using MTMS (Ex.5) or a combination of butanol and MTMS (Ex.8) in initial reactor charge.
Stability enhancement: post-addition (ref. recipe - no acrylates)

### Examples 8 to 18:

Example 1 is mixed with different stabilizers and the stability is assessed by adding ppm of water to the system until gelling.

| | Ex 9 | Ex 10 | Ex 11 | Ex 12 | Ex 13 | Ex 14 | Ex 15 | Ex 16 | Ex 17 | Ex 18 |
|---|---|---|---|---|---|---|---|---|---|---|
| Ex 1 | 95 | 95 | 95 | 95 | 95 | 95 | 95 | 95 | 95 | 94 |
| Isopropanol technical | 5 | | | | | | | | | 2 |
| Isopropanol anhydrous | | 5 | | | | | | | | |
| Butanol anhydrous | | | 5 | | | | | | | |
| VinylTrimethoxySilane | | | | 5 | | | | | | 2 |
| MethylTrimethoxySilane | | | | | 5 | | | | | |
| Orthoformate | | | | | | 5 | | | | |
| Geniosil XL70 | | | | | | | 5 | | | |
| Vestamin A139 | | | | | | | | 5 | | |
| Dynasiian 6490 | | | | | | | | | 5 | |
| Max water content until gel (ppm) | 400 | 400 | 400 | 1400 | 800 | 400 | 1000 | 0 | 1000 | 1000 |

Best stability results (highest max water content before gel) are obtained by using VinylTriMethoxySilane (Ex.12) as water scavenger or by the combination of alcohol and VinylTriMethoxySilane (Ex.18).

### Stability enhancement: Synthesis (replacing VV9 with high Tg acrylates)

**Examples 19 to 26:** in a glass reactor equipped with a stirrer and a nitrogen inflow. The initial reactor charge is poured in the reactor and a nitrogen blanket is applied (101n/h). The stirrer is set at 80RPM. The temperature is set to 115°C for Ex. 19-20 and 105°C for Ex. 21 to 26. The monomer mix is prepared by mixing the monomers and the initiator. Once the temperature inside the reactor is reached, a shot of initiator is added, and the nitrogen flow is stopped. Afterwards the monomer mix is added into the reactor over a period of 4 hours. At the end of the addition, the booster composed of the initiator and the solvent is added for 1 hour at 115°C for Ex. 19-20 and 105°C for Ex. 21 to 26. Then, the reactor is kept at the same temperature for an extra hour. The reactor is eventually cooled down below 80°C and the product discharged.

Ex.22 to 24 show stable process and stable product at discharge when VeoVa 9 is replaced by high Tg acrylates. Ex.25 led to gel during process and was successfully stabilized in Ex.26 by increasing the level of alcohol in the initial reactor charge.

**Procedure for coating formulation:** The resin is first diluted with the solvent (of the synthesis) to a viscosity between 100 and 200 cPs. Then the catalyst DBTDA is added to the diluted resin at a level of 0.5% active. Afterwards, the formulated resin is applied on a panel at 100um wet with a Mayer rod and left to dry at 23±2°C and 50±5% Relative Humidity.

| | Ex 19 | Ex 20 | Ex 21 | Ex 22 . | Ex 23 | Ex 24 | Ex 25 | Ex 26 |
|---|---|---|---|---|---|---|---|---|
| | 201117CS | 201118CS | 201126CS | 201202LB | 210112CS | 201207LB | 210111CS | 210120CS |
| **Initial reactor charge** | | | | | | | | |
| Butyl Acetate | 18.5 | 18.5 | 18.5 | 18.5 | 18.5 | 18.5 | 18.5 | 12 |
| Exxsol D30 | | | | | | | | |
| ShellSol D25 | | | | | | | | |
| Butanol Anhydrous | | | 2.5 | 2.5 | 2.5 | 2.5 | 2.5 | 9 |
| MethylTrimethoxySilane | | | 2.5 | 2.5 | 2.5 | 2.5 | 2.5 | 2.5 |
| **Initiator shot** | | | | | | | | |
| Luperox 270 | 0.4 | 0.4 | | | | | | |
| Luperox 531M80 | | | 0.4 | 0.4 | 0.4 | 0.4 | 0.4 | 0.4 |
| **Monomer mix** | | | | | | | | |
| VeoVa 9 | 61.5 | 52 | 52 | | | 35 | | |
| VeoVa 10 | 31.25 | 28 | 28 | 52 | 48 | 33 | 45 | 45 |
| isoBornylMethacrylate | | | | 28 | | | | |
| Tert-butyl Methacrylate | | | | | 32 | | | |
| Methyl Methacrylate | | | | | | 12 | 35 | 35 |
| Silquest A171 | 0 | 5 | 5 | 5 | 5 | 5 | 5 | 5 |
| Silquest A174 | 7.25 | 15 | 15 | 15 | 15 | 15 | 15 | 15 |
| Luperox 270 | 1.4 | 1.4 | | | | | | |
| Luperox 531M80 | | | 1.4 | 1.4 | 1.4 | 1.4 | 1.4 | 1.4 |
| **Booster** | | | | | | | | |
| Butyl Acetate | 7.1 | 7.1 | 7.1 | 7.1 | 7.1 | 7.1 | 7.1 | 7.1 |
| Exxsol D30 | | | | | | | | |
| ShellSol D25 | | | | | | | | |
| Luperox 270 | 4 | 1.33 | | | | | | |
| Luperox 531M80 | | | 1.33 | 1.33 | 1.33 | 1.33 | 1.33 | 1.33 |
| Solids % | 79.8 | 80.6 | 77.3 | 77.2 | 76.5 | 77.1 | | 75.9 |
| Viscosity (cps) | 42300 | 55800 | 7400 | 18650 | 32400 | 13200 | | 46200 |
| Mw (Da) | 23000 | 28000 | 20000 | 21500 | 9597 | 21685 | unstable | 30436 |
| Mn (Da) | 8700 | 10200 | 8500 | 8700 | 25849 | 9400 | | 9257 |
| PDI | 2.7 | 2.7 | 2.4 | 2.5 | 2.7 | 2.3 | | 3.3 |
| Max water content until gel (ppm) | 400 | 200 | 1200 | 600 | 200 | 600 | - | 200 |

| | Ex 28 | Ex 29 | Ex 30 | Ex 31 | Ex 32 | Ex 33 | Ex 34 | Ex 35 |
|---|---|---|---|---|---|---|---|---|
| Resin applied | Ex.9 | Ex.19 | Ex.20 | Ex.21 | Ex.22 | Ex.23 | Ex.8 | Ex.24 |
| | 201027CS | 201117CS | 201118CS | 201126C5 | 201202LB | 201214LB | 201021CS | 201207LB |
| Dust-free time (min) | 6.5 | 4 | 3.5 | 4.5 | 5.5 | 3.5 | 6.5 | 7.5 |
| Koening hardnes (sec) after 6hrs | 14 | 13 | 15 | 20 | 27 | 31 | 6 | 17 |
| Koening hardnes (sec) after 24hrs | 39 | 30 | 47 | 52 | 52 | 55 | 9 | 38 |
| Koening hardnes (sec) after 7days | 74 | 45 | 91 | 95 | 79 | 79 | 24 | 66 |

Properties upon application are showing similar drying development for the VeoVa9-based and high Tg Acrylate-based material.

High gloss recipe: Synthesis in presence of Styrene

| | Ex 36 2005280J | Ex 37 2006080J | Ex 38 2007080J | Ex 39 2008050J |
|---|---|---|---|---|
| **Initial reactor charge** | | | | |
| Butyl Acetate | 18.5 | 18.5 | 18.5 | 18.5 |
| Styrene | 0 | 0 | 2 | 4 |
| VeoVa 10 | 0 | 0 | 20 | 20 |
| **Initiator shot** | | | | |
| Luperox 531M80 | 0.4 | 0.4 | 0.4 | 0.4 |
| **Monomer mix** | | | | |
| VeoVa 9 | 52 | 0 | 0 | 0 |
| VeoVa 10 | 28 | 44 | 18 | 18 |
| Styrene | 0 | 20 | 8 | 16 |
| Vinyl Acetate | 0 | 0 | 10 | 10 |
| Methyl Methacrylate | 0 | 16 | 24 | 12 |
| Silquest A171 | 5 | 5 | 5 | 5 |
| Silquest A174 | 15 | 15 | 15 | 15 |
| Luperox 531M80 | 1.4 | 2.8 | 2.8 | 2.8 |
| **Booster** | | | | |
| Butyl Acetate | 7.1 | 7.1 | 7.1 | 7.1 |
| Luperox 531M80 | 4 | 2.6 | 2.6 | 2.6 |
| Solids % | 78.2 | 78.3 | 78.5 | 77.6 |
| Viscosity (cps) | 19120 | 4720 | 64400 | 9220 . |
| Mw (Da) | 16718 | 15874 | 20214 | 16367 |
| Mn (Da) | 6451 | 6005 | 6446 | 6524 |
| PDI | 2.6 | 2.6 | 3.0 | 2.5 |
| Visual appearance | clear | hazy/ dephasing | clear | clear |

Best synthesis results at discharge are obtained by combining part of Styrene and VeoVa 10 in the Initial Reactor Charge (Ex.38-39).

Ex. 36 to 39 are applied by first diluting the system with the solvent of the synthesis to a viscosity between 100 and 200 cPs. Then the catalyst, DBTDA, is added to the diluted resin at a level of 0.5% active. Afterwards, the formulated resin is applied on a panel at 100um wet with a Mayer rod and left to dry at 23±2°C and 50±5% Relative Humidity.

| | Ex 40 | Ex 41 | Ex 42 | Ex 43 |
|---|---|---|---|---|
| Resin applied | Ex 36 | Ex 37 | Ex 38 | Ex 39 |
| | 200528OJ | 200608OJ | 200708OJ | 200805OJ |
| Dust-free time (min) | 7 | 6 | 6 | 6 |
| Koening hardnes (sec) after 6hrs | 8 | 13 | 12 | 9 |
| Koening hardnes (sec) after 24hrs | 34 | 33 | 33 | 28 |
| Koening hardnes (sec) after 7days | 83 | 47 | 70 | 61 |
| Gloss | 83 | hazy | 86 | 89 |

Best gloss is obtained with Ex.38 containing the highest level of Styrene.

### Additional Ex. with VAM (incl. better conversion)

Ex. 46 and 48 were compared by GPC before the boosting step. Ex 46 exhibits about 11% area of unconverted monomer before the boosting step, whereas Ex.48 is showing 4%. When an extra hour is applied without adding booster, full conversion can be achieved with Ex.48.

Samples 51, 52 and 53 were formulated as examples 36 to 39.

| | Ex 46 200603OJ | Ex 47 200625OJ | Ex 48 200703OJ | Ex 49 200810OJ | Ex 50 200811OJ |
|---|---|---|---|---|---|
| **Initial reactor charge** | | | | | |
| Butyl Acetate | 18.5 | 18.5 | 18.5 | 0 | 0 |
| Exxsol D30 | 0 | 0 | 0 | 13.5 | 18.5 |
| Butanol | 0 | 0 | | 5 | 0 |
| **Initiator shot** | | | | | |
| Luperox 531M80 | 0.4 | 0.4 | 0.4 | 0.4 | 0.4 |
| **Monomer mix** | | | | | |
| VeoVa 9 | 0 | 12 | 0 | 12 | 12 |
| VeoVa 10 | 45.4 | 28 | 38 | 28 | 28 |
| MethylMethacrylate | 34.6 | 0 | 12 | 0 | 0 |
| Vinyl Acetate | 0 | 40 | | 40 | 40 |
| Silquest A171 | 5 | 5 | 5 | 5 | 5 |
| Silquest A174 | 15 | 15 | 15 | 15 | 15 |
| Luperox 531M80 | 2.8 | 2.8 | 2.8 | 2.8 | 2.8 |
| **Booster** | | | | | |
| Butyl Acetate | 7.1 | 7.1 | 7.1 | 7.1 | 7.1 |
| Luperox 531M80 | 2.6 | 2.6 | 2.6 | 2.6 | 2.6 |
| | | | | | |
| Solids % | 78.7 | 78.3 | 78.8 | 79.8 | 78.3 |
| Viscosity (cps) | 35000 | 20480 | 20048 | 11080 | 23240 |
| Mw (Da) | 24600 | 28107 | 28055 | 20880 | 21032 |
| Mn (Da) | 8879 | 7232 | 7754 | 5178 | 5089 |
| PDI | 2.7 | 3.9 | 3.6 | 4.0 | 4.1 |
| Pre-booster conversion (%area by GPC | 11.9 | 1.4 | 4.8 | 4.9 | 4.6 |
| | Ex 51 | Ex 52 | Ex 53 | | |
| Resin applied | Ex 47 | Ex 49 | Ex 50 | | |
| | 200625OJ | 200810OJ | 200811OJ | | |
| Dust-free time (min) | 4 | 12 | 14 | | |
| Koening hardnes (sec) after 6hrs | 4 | 2 | 5 | | |
| Koening hardnes (sec) after 24hrs | 9 | 6 | 9 | | |
| Koening hardnes (sec) after 7days | 36 | 24 | 19 | | |
| Gloss | 84 | 83 | 83 | | |

**Example 54:** in a glass reactor equipped with a stirrer and a nitrogen inflow. The initial reactor charge is poured in the reactor and a nitrogen blanket is applied (10ln/h). The stirrer is set at 80RPM. The temperature is set to 115°C. The monomer mix is prepared by mixing the monomers and the initiator. Once the temperature inside the reactor is reached, a shot of initiator is added, and the nitrogen flow is stopped. Afterwards the monomer mix is added into the reactor over a period of 4 hours. At the end of the addition, the booster composed of the initiator and the solvent is added for 1 hour at 115°C. Then, the reactor is kept at the same temperature for an extra hour. The reactor is eventually cooled down below 80°C and the product discharged.

| | | | | |
|---|---|---|---|---|
| | 54 | | | |
| | 1RPT | | | |
| Initial reactor charge | | | | |
| Butyl Acetate | 18,5 | | | |
| Initiator shot | | | | |
| Luperox 270 | 0,4 | | | |
| Monomer mix | | | | |
| VeoVa 9 | 52 | | | |
| VeoVa 10 | 28 | | | |
| Silquest A171 | 5 | | | |
| Silquest A174 | 15 | | | |
| Luperox 270 | 1,4 | | | |
| Booster | | | | |
| Luperox 270 | 4 | | | |
| Butyl acetate | 7,1 | | | |
| Stabilizator package | | | | |
| Silquest A171 | 2 | | | |
| Isopropanol | 2 | | | |
| Solids % | 77,2 | | | |
| Viscosity (cps) | 14600 | | | |
| Mw (Da) | 10602 | | | |
| Mn (Da) | 34688 | | | |
| PDI | 3,27 | | | |
| | | 54 | 55 | 56 |
| Gamma-mercaptopropyltrimethoxysilane | | | x | |
| Gamma-aminopropyltrimethoxysilane | | | | x |

**Procedure for coating formulation:** The resin is first diluted with the solvent (butyl acetate) to a viscosity of 300 cPs. Then the catalyst DBTDL is added to the diluted resin at a level of 1% active. For examples 55 and 56 an additive is added at a level of 3% active. Afterwards, the formulated resin is applied on a stainless-steel panel at 150 µm wet with a Mayer rod and left to dry at 23±2°C and 50±5% Relative Humidity.

### Adhesion on stainless steel testing:

After 7 days drying, rating adhesion by tape test following ASTM D3359 is performed.

| | 54 | 55 | 56 |
|---|---|---|---|
| Gamma-mercaptopropyltrimethoxysilane | | x | |
| Gamma-aminopropyitrimethoxysitane | | | x |
| ASTM D3359 | 0B | 5B | 5B |

Best adhesion results on stainless steel panels are obtained when adding an additive to the resin.

### Adhesion on epoxy primer testing:

A fast drying, high solid epoxy primer paint recommended as long-lasting barrier protection in coating systems for severe corrosive environments is applied on a stainless-steel panel at 150 µm wet with a Mayer rod and left to dry at 23±2°C and 50±5% Relative Humidity for 21 days.

The resin is diluted with the solvent (Butyl acetate) to a viscosity of 300 cPs. Then the catalyst DBTDL is added to the diluted resin at a level of 1% active. For example 2 an additive is added at a level of 3% active. Afterwards, the formulated resin is applied on the epoxy primer paint at 150 µm wet with a Mayer rod and left to dry at 23±2°C and 50±5% Relative Humidity for 7 days.

| | 54 | 56 |
|---|---|---|
| Gamma-aminopropyltrimethoxysilane | | x |
| ASTM D3359 | 0B | 5B |

An improved adhesion on epoxy primer is observed by adding 3% active of gamma-aminopropyltrimethoxysilane to the resin.

### Paint adhesion on epoxy primer testing:

Pigmented topcoat preparation with the resin of example 54:

| | | |
|---|---|---|
| | | 54 |
| 1 | Resin | 499,2 |
| 2 | Disperbyk 110 | 4,7 |
| 3 | BYK 358N | 4,8 |
| 4 | Byk 077 | 4,8 |
| 5 | Solthix 250 | 9,7 |
| 6 | Ti-Pure TS6200 | 271 |
| | Let down | |
| 7 | Tinuvin 123 | 11,5 |
| 8 | Tinuvin 1130 | 14,8 |
| 9 | Ethyl ethoxypropionate | 122 |
| 10 | Methyl amyl ketone | 57,4 |
| | Solids % | 69,4 |

Items 1 to 5 are added to appropriately sized stainless mixing vessel. Start low speed agitation with Cowles type dispersion blade to homogenize the materials. With mild agitation, slowly begin adding item 6. As viscosity builds, increase disperser speed. With all of the pigment added to the vessel, increase speed until a toroidal flow or doughnut effect. After a few minutes, stop the agitation and scrape down the walls of the vessel with a spatula, then resume the dispersion process. After 20 minutes, stop the agitator and check the grind with a Hegman gauge. It should be above 7. If it is not the case, continue grinding for another 20 minutes. Once the grind is achieved, add the remining ingredients (items 7 and 8). Then add progressively the solvents (items 9 and 10), decrease speed of agitation if needed to avoid splashing. Filter on 375 µm mesh into a metal can container. Add additional solvent if needed to reach a viscosity of 70 KU.

The catalyst DBTDL is added to the diluted paint at a level of 1% active on polymer solids. For example 55 to 61 an additive is added at a level described in the table. Afterwards, the formulated paint is applied on an epoxy primer paint at 150 µm wet with a Mayer rod and left to dry at 23±2°C and 50±5% Relative Humidity for 7 days.

| | 54 | 55 | 56 | 57 | 58 | 59 | 60 | 61 |
|---|---|---|---|---|---|---|---|---|
| Gamma-mercaptopropyltrimethoxysilane | | 3 | | | | | | |
| 3-mercaptopropyltrimethoxysilane Gamma-aminopropyltrimethoxysilane | | | 3 | 3 | | | | |
| N-beta-(Aminoethyl)-gamma-aminopropyltrimethoxysilane | | | | | 2 | | | |
| CoatOSil MP 200 | | | | | | 3 | | |
| Gamma-glycidoxypropyltriethoxysilane | | | | | | | 3 | |
| CoatOSil 2287 | | | | | | | | 2 |
| ASTM D3359 | 0B | 5B | 5B | 5B | 5B | 5B | 5B | 5B |

Adhesion improvement on epoxy primer is observed by adding one of the listed additives.

Paint gloss and stability improvement: Use of new dispersing agent

| | 54 | 55 |
|---|---|---|
| | | |
| Resin | 499,2 | 499,2 |
| Disperbyk 110 | 4,7 | |
| BYK 358N | 4,8 | 4,8 |
| Byk 077 | 4,8 | 4,8 |
| Solthix 250 | 9,7 | 9,7 |
| Ti-Pure TS6200 | 271 | 271 |
| Let down Tinuvin 123 | 11,5 | 11,5 |
| Tinuvin 1130 | 14,8 | 14,8 |
| | | |
| Ethyl ethoxypropionate | 122 | 122 |
| Methyl amyl ketone | 57,4 | 57,4 |
| | | |
| Solids % | 69,4 | 69,9 |

Paint is prepared following above procedure. The catalyst DBTDL is added to the diluted paint at a level of 1% active. Afterwards, the formulated paint is applied on stainless steel panel at 150 µm wet with a Mayer rod and left to dry at 23±2°C and 50±5% Relative Humidity for 7 days.

Best paint gloss is obtained with Ex 55 containing Disperplast P as dispersing agent.

## Claims

1. A process to produce a stable copolymer composition, consisting in a radical copolymerization of monomers in presence of 0,5 to 10 wt % of a non-polymerizable moisture scavenger and/or a C1-C9 alcohol
whereby the monomers consist of
- A1 97 to 0 wt % of vinyl ester monomers of the formula: 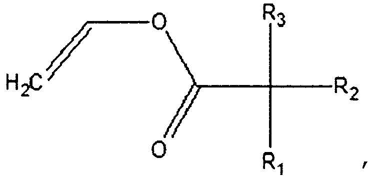 wherein R1, R2, R3 are hydrogen or alkyl groups with 1 to 15 carbon atoms, the total number of carbon atoms of R1, R2, and R3 ranging from 1 to 20;
and
- A2 3 to 35 wt % of silane functional monomers and
- A3 60 to 0% of vinyl acetate and
- A4 97 to 0% of acrylate or methacrylate monomers
- A5 0 to 30% of other copolymerisable monomers
- 0 to 20% of a non polymerisable C1 to C9 alcohol
- 0 o 40% of solvents and additives.

2. The process of claim 1, wherein the non polymerisable moisture scavenger is an alkoxysilane and/or an orthoester.

3. The process of claim 2 wherein the alkoxy silane is is methyltrimethoxysilane, ethyltrimethoxysilane, methyl triethoxysilane, ethyltriethoxysilane, and/or the orthoester is an orthoformate or an orthoacetate.

4. The process of claim 1 wherein the non-polymerizable C1 to C9 alcohol is present at a level of 0,5 to 15wt% and is propanol, isopropanol, butanol, isobutanol, terbutanol, pentanol, hexanol, heptanol, octanol, isononanol and combination thereof.

5. The copolymer composition of claim 1, wherein the A₁ and A₂ monomers comprises from about 15 wt.% to about 95% wt.% of A₁ monomer; and from about 5 wt.% to about 35% wt.% of A₂ monomer, wherein the wt.% is based on the total weight of the at least A₁ and A₂ monomers and the total weight percent of the polymer is 100 wt.%.

6. The copolymer composition of claim 1, wherein resin is further derived from one or more monomers selected from the group consisting of a A₃ monomer comprising vinyl acetate, a A₄ monomer comprising an acrylate ester, a metacrylate ester, or a combination thereof, an A₅ monomer comprising any other vinyl monomer, and combinations thereof.

7. The copolymer composition of claim 1, wherein vinyl ester monomers (A) are those derived from branched acids with a total number of Carbon atoms of R1, R2, and R3 ranging from 6 to 12.

8. The copolymer composition of claim 1, wherein the vinyl ester monomer comprises the formula: 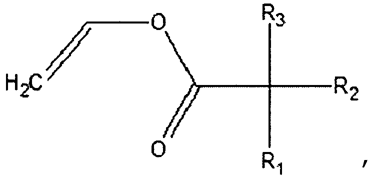
wherein R1, R2, R3 are hydrogen or alkyl groups with 1 to 15 carbon atoms, the total number of carbon atoms of R1, R2, and R3 ranging from 1 to 20; and
wherein the vinyl silane monomer comprises the formula: 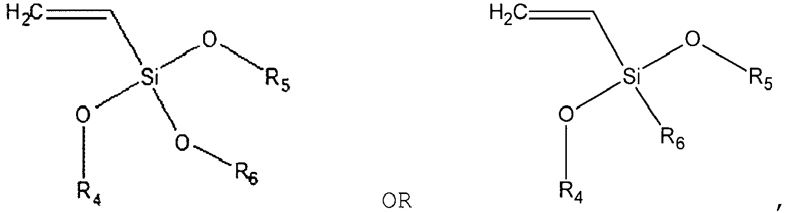 wherein R4, R5 and R6 are alkyl or alkyloxy groups having 1 to 4 carbon atoms.

9. The copolymer composition of claim 1, wherein the at least A₁ and A₂ monomers comprises:
from 10 wt.% to 95% wt.% of A₁ monomer;
from 5 wt.% to 35% wt.% of A₂ monomer;
from 0 wt.% to 60% wt.% of A₃ monomer;
from 0 wt.% to 97% wt.% of A₄ monomer;
from 0 wt.% to 30% wt.% of A₅ monomer; and
, wherein the wt.% is
based on the total weight of the monomers, and the total weight percent is 100 wt.%.

10. formulation consisting in the copolymer composition of claim 1, further comprising one or more materials selected from the group consisting of a solvent, a catalyst, a pigment, a filler, a paint additive, a C1 to C6 alcohol, a polysiloxane polymer an adhesion promotor, and combinations thereof.

11. The formulation of claim 8, wherein the formulation comprises:
from 5 wt.% to 80 wt.% of the copolymer of claim 1;
from 0.1 wt.% to 10% wt.% of the water scavenger;
from 5 wt.% to 60 wt.% of the solvent;
from 0.05 wt.% to 3.0 wt.% of the catalyst;
from 0 wt.% to 15 wt.% of the C1 to C6 alcohol;
from 0 wt.% to 60% wt.% of the polysiloxane polymer;
from 0 wt.% to 4 wt.% of the adhesion promoter; and
from 0 wt.% to 60 wt.% of paint additives / pigments / fillers, wherein the wt.% is based on the total weight of the composition and the total weight percent is 100 wt.%.

12. An ambient temperature curing paint formulation based on the copolymer composition of claim 1.

13. An ambient temperature curing paint formulation in one pack system based the copolymer composition of claim 1.

14. An object coated with the formulations of claims 12 and 13.
